# EUROPEAN PATENT SPECIFICATION

(11) **EP 2 059 001 B1**
(45) Date of publication and mention of the grant of the patent: **02.11.2011**
(21) Application number: 07291337.9
(22) Date of filing: 07.11.2007
(51) Int. Cl.: H04L 29/06

(54) **Multitype SIP processing element**
Multityp-SIP-Verarbeitungselement
Élément de traitement SIP multi-type

(43) Date of publication of application: 13.05.2009
(73) Proprietor: Alcatel Lucent, 75008 Paris (FR)
(72) Inventor: Sienel, Jürgen, 71229 Leonberg (DE); Drewniok, Marc, 73728 Esslingen (DE); Schumann, Roberto, 70193 Stuttgart (DE); Steinbrenner, Michael, 71065 Sindelfingen (DE)
(74) Representative: Schmidt, Werner Karl

(56) References cited:
- MARSHALL AT&T K RAMAKRISHNAN TERAOPTIC NETWORKS E MILLER TERAYON G RUSSELL CABLELABS B BESER PACIFIC BROADBAND M MANNETTE K STEINB: "SIP Extensions for supporting Distributed Call State; draft-ietf-sip-state-02.txt;" IETF STANDARD-WORKING-DRAFT, INTERNET ENGINEERING TASK FORCE, IETF, CH, vol. sip, no. 2, August 2001 (2001-08), pages 1-12, XP015028105 ISSN: 0000-0004
- MAURICIO CORTES ET AL: "Towards Stateless Core: Improving SIP Proxy Scalability" GLOBAL TELECOMMUNICATIONS CONFERENCE, 2006. GLOBECOM '06. IEEE, IEEE, PI, November 2006 (2006-11), pages 1-6, XP031075195 ISBN: 1-4244-0356-1
- LUCA VELTRI CORITEL STEFANO SALSANO UNIV OF ROME "TOR VERGATA" DONALD PAPALILO CORITEL: "SIP Extensions for QoS support; draft-veltri-sip-qsip-01.txt" IETF STANDARD-WORKING-DRAFT, INTERNET ENGINEERING TASK FORCE, IETF, CH, no. 1, October 2002 (2002-10), pages 1-42, XP015005620 ISSN: 0000-0004
- SINGH ET AL: "Failover, load sharing and server architecture in SIP telephony" COMPUTER COMMUNICATIONS, ELSEVIER SCIENCE PUBLISHERS BV, AMSTERDAM, NL, vol. 30, no. 5, 20 February 2007 (2007-02-20), pages 927-942, XP005895774 ISSN: 0140-3664
- ROSENBERG J ET AL: "SIP: Session Initiation Protocol" IETF STANDARD, INTERNET ENGINEERING TASK FORCE, IETF, CH, June 2002 (2002-06), pages 1-269, XP015009039 ISSN: 0000-0003

## Description

The present invention relates to a proxy for a signalling protocol, and more particularly to a SIP proxy.

The Session Initialization Protocol (SIP) provides a signalling and call setup functionality for Internet Protocol based communications. SIP has been designed to enable the building of such features in network elements known as Proxy Servers and User Agents. These are features that permit familiar telephone-like operations: dialling a number, causing a phone to ring, hearing ringback tones or a busy signal. SIP is a peer-to-peer protocol. As such it requires only a very simple (and thus highly scalable) core network with intelligence distributed to the network edge, embedded in endpoints (terminating devices built in either hardware or software). SIP features are implemented in the communicating endpoints, i.e. at the edge of the network.

SIP is a client/server application protocol, where client applications send SIP request messages to create, change, or destroy a multimedia session. Server applications respond with one or more responses for each SIP request. RFC 3261 describes an intermediary element called a SIP proxy. Proxies help process and route SIP messages from/to SIP endpoints. Endpoints in a SIP signaling path are called User Agents (UA). An endpoint can play the role of a User Agent Client (UAC) when originating requests, or of a User Agent Server (UAS) as the destination of the request. SIP proxies are routing elements that decide the message's next hop(s) based on information coming from DNS servers, network traffic, etc. SIP proxies route SIP messages to one or more terminating User Agents.

SIP works in concert with several other protocols and is involved in the signalling portion of a communication session. SIP acts as a carrier for the Session Description Protocol (SDP). In typical use, SIP "sessions" are packet streams of the Real-time Transport Protocol (RTP). RTP is the carrier for the actual voice or video content itself. SIP is similar to the hyper text transfer protocol (HTTP) and shares some of its design principles: It is text-based and request-response structured. SIP shares many HTTP status codes, such as the familiar '404 not found'. SIP is a stateless protocol, hence making it possible to easily implement failover and other features that are difficult in stateful protocols such as H.323. SIP and H.323 are not limited to voice communication but can mediate any kind of communication session from voice to video or future multimedia applications.

Although two SIP endpoints can communicate without any intervening SIP infrastructure, which is why the protocol is described as peer-to-peer, this approach is mostly impractical for a public service. Thus, most SIP implementations require proxy and registrar network elements in a practical service. The distinction between types of SIP servers is logical, not physical. A server in a SIP-based IP telephony environment is usually required in large scale scenarios with numerous telephone numbers or when the Internet is the long distance transport. A SIP proxy forwards SIP requests downstream to the hosts, where the user intends to send it. Responses are forwarded upstream to the caller. The SIP proxy can take over call control from the terminals and serves as a central repository for address translation.

Proxy servers help routing requests to the user's current location, authenticate and authorize users for services, implement provider call-routing policies, and provide features to users. SIP also provides a registration function that allows users to up-load their current locations for use by proxy servers. A User Agent Server that handles a register is given the special name registrar.

SIP supports a proxy that is operating in a stateless or stateful mode. A stateless proxy establishes the call and then politely gets out of the way. The stateless proxy can be part of the signalling path, but it records no state information. It only forwards the messages. A stateful proxy stays on the signalling path and records state information of a SIP dialog. It can forward requests to more than one host and decide what to do with the responses. The stateful proxy stores signalling events for the duration of the call. For instance, some SIP elements store state information to handle message retransmissions with adjacent elements. Some SIP proxy servers deposit cookies in the IP phone/terminal as a method of providing state information.

A Back-to-Back User Agent (B2BUA) acts as a user agent to both ends of a SIP call. The B2BUA is responsible for handling all SIP signalling between both ends of the call, from call establishment to termination. Each call is tracked from beginning to end, allowing the operators of the B2BUA to offer value-added features to the call. To SIP clients, the B2BUA acts as a User Agent Server (UAS) on one side and as a User Agent Client (UAC) on the other (back-to-back) side. A B2BUA operates like a proxy, but terminates the call legs on both sides and connects the two legs via internal functionality. The B2BUA is able to terminate a call on one side and originate a new call on the other side while a proxy only modifies and forwards SIP messages. The basic implementation of a B2BUA is defined in RFC 3261. The B2BUA may provide functionalities like call management, e.g. billing, automatic call disconnection, call transfer, etc., network inter-working, e.g. protocol adaptation, hiding of network internals, e.g. private addresses hiding, network topology hiding, etc., or codec translation between two call legs. Because a B2BUA maintains call state for all SIP calls it handles, failure of the B2BUA affects all these calls. Often, B2BUAs also terminate and bridge the media streams to have full control over the whole session. A common usage for a B2BUA is a Session Border Controller (SBC), which is positioned at the border of a network and controls the incoming signalling and media traffic.

Hence there are mainly three types of signaling proxies known: Stateless proxies that pass trough signaling messages; Statefull proxies that maintain a session state or a session context by parsing messages; and Terminating proxies such as B2BUAs that terminate signaling protocol and maintain associations between the terminations. When initializing a session using the initial signaling, a client usually has first to invoke a proxy. A problem is that it is difficult for the client to decide which proxy of the above mentioned type should be invoked. In many call flow scenarios it is not clear in the beginning, whether a stateless proxy is enough or whether a B2BUA is needed.

The internet draft of the IETF by Marshall et. al, "SIP Extension for supporting Distributed Call State", No. 2, August 2001 proposes a new general state header field that can be used by the proxy to distribute call state information to the UAs. By means of this, state information is stored by the UAs and the proxy servers can be maintained in a stateless mode.

Mauricio et al., "Towards Stateless Core: Improving SIP Proxy Scalability", IEEE Globecom, Nov. 2006, proposes an algorithm that allows a proxy server to decide on a per request basis if a given request should rather be handled in a stateless or statefull mode. The switching of the proxy type is performed on the basis of the network load conditions.

The internet draft of the IETF Veltri et al., "SIP Extensions for QoS support", Oct. 2002 proposes two variants, a stateless and a statefull variant, of the so called Q-SIP protocol. Similar to RFC3261 it does not address the problem of change of proxy states.

Singh et al., "Failover, load sharing and server architecture in SIP telephony", Computer Communications, Elsevier, Amsterdam, NL, vol. 30, no. 5, 20.02.2007, pages 927-942, focuses on describing failover and loadsharing techniques for SIP proxy servers. The proxy servers are configured in such a way that they first try to process a request in a stateless mode and, if a request cannot be proxied statelessly, to fall back into a statefull mode.

The present invention provides a proxy with the capability to alter its type and to use the most efficient proxy type preferably. These and other objectives of the invention are achieved by means of the features of the appended independed claims.

The above problem is overcome by a proxy for a signalling protocol, the proxy comprising a component for a context-full proxy signalling mode and component for a context-less proxy signalling mode signalling. The proxy further comprises a control means to change between context-less and context-full mode of operation and vice versa. Further is provided a protocol evaluation means to evaluate received protocol requests. The protocol evaluation means is configured to detect the reception of a proxy mode change request and to signal the control means to change the proxy mode depending on the received proxy mode change request.

The present invention allows using initially a stateless SIP proxy, since it is more efficient in processing subsequent SIP requests. The invention provides a functionality that leads to optimal resource usage (stateless proxy) while still having high flexibility (B2BUA) by being able to switch between both on demand.

Preferably, the signalling protocol is the Session Initialization Protocol (SIP). However, the invention is not limited to this protocol and may be employed with other protocols where proxies can operate in a context-full operation mode and in a context-less operation mode. A context-less mode of operation for a signalling proxy does not maintain a session state or session context, while a context-full mode maintains a session state or session context. The termination of the signalling protocol for both connections to UAs and the maintenance of associations between the terminations (as done by B2BUA) can be considered as a special case of a context-full signalling mode.

When switching to a context-full state, the proxy initializes a session context and sets its internal state machine into an appropriate state for the session. The context may be established by applying information received with a protocol message. For instance, the initial SIP Invite request may be included in the switch request to the proxy or transmitted separately. In some instances, it may be necessary to include information from more messages in the switch request in order to correctly reconstruct the session sate in the proxy. Alternatively, the session state is tracked or reconstructed in the UA that requests the mode switch and data defining the appropriate state for the state machine in the proxy is sent to the proxy. For instance, a message including a description of the session context is compiled in some format at the UA and transferred to the proxy. It is intended that, after initializing the session context, the proxy behaves as having tracked the session from the beginning and correspondingly maintained its state machine. In a simple case, the proxy is in the same state as having received and processed the initial Invite request.

Such a proxy can be realized by a network device or implemented as a computer software product. It serves a network device that comprises signalling means for requesting a transition between the modes of the proxy.

The above problem is solved inter alia by a telecommunication network comprising such signalling proxies.

And the above problem is solved by a method for changing the modes of operation of a proxy for a signalling protocol between a context-full signalling mode a context less signalling-mode signalling. The method comprises the step of receiving a mode change request from a client which commands the proxy to alter its operational mode. In response, the proxy sets a context based on the received request and alters the mode of operation from one mode to another depending on the received proxy mode change request.

In other words the invention concerns a proxy realizing all the above mentioned modes of operation with transitions between the signaling proxy types and a protocol enhancement that allows triggering a transition. The advantage of having a functionality to switch between stateless proxy and B2BUA is to make use of the benefits of both entities. While the stateless proxy is less resource consuming than a B2BUA, it can only perform a limited set of features. Nevertheless, a stateless proxy server can handle more sessions in parallel than a similar B2BUA server because it does not have to perform the SIP parsing and the state machine control on the same deep level. But in many cases, it cannot be avoided to use a B2BUA in order to perform certain services. Therefore, this invention provides a mechanism that allows using the currently necessary entity by switching on demand from one to the other.

The invention is described in the following by referring to exemplary embodiments illustrated schematically in the accompanying figures, wherein the objects and features of the invention will become apparent from the description of the preferred embodiments, wherein
Fig. 1 shows schematically a signaling proxy according to an embodiment of the invention;
Fig. 2 shows a signaling flow to set up a call via a proxy; and
Fig. 3 show a signaling flow for an example where a stateless proxy is switched to a B2BUA.

One aspect of the invention is a combination of a stateless SIP proxy and a B2BUA where the signaling mode of the proxy can be switched within a session upon request from a UA. Other aspects of the invention relate to different transitions between stateless and stateful proxies and B2BUAs. In general, the transition is triggered by the reception of an external event such as a protocol message or request, e.g. a SIP request.

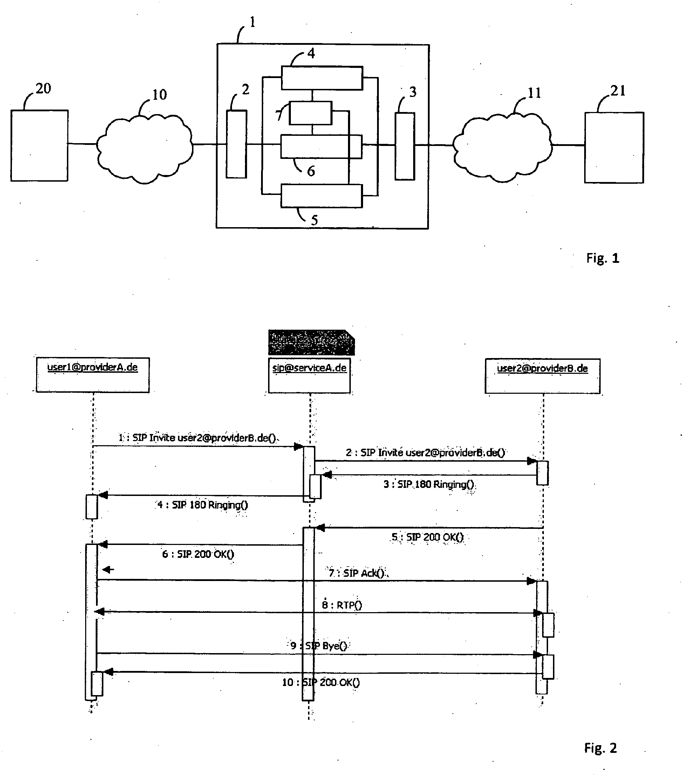

Fig. 1 illustrates schematically a signaling proxy 1 according to an embodiment of the present invention. Proxy 1 is configured as signaling proxy for SIP. Signaling proxy 1 comprises a first network interface 2 connected to communication network 10 and a second network interface 3 connected to communication network 11. A first network element 20 is connected to the communication network 10 and may act as User Agent Client (UAC). A second network element 21 is connected to the communication network 11 and may act as User Agent Server (UAS). Of course, more UAs and networks may be connected to the proxy 1 which can proxy many connections between UAs.

Proxy 1 further comprises a first signaling component 4 for operation in a context-less proxy signaling mode, and a second signaling component 5 for operation in a context-full proxy signaling mode. In the context-less proxy signaling mode, the proxy 1 operates like a stateless SIP proxy. In the context-full proxy signaling mode, the proxy 1 operates like a stateful SIP proxy or a B2BUA. According to another embodiment of the invention, a third signaling component (not shown) is provided which handles signaling as a B2BUA while the second signaling component 5 operates as a stateful SIP proxy that maintains a session state but does not terminate the signaling protocol.

The signalling proxy 1 further comprises a control unit 7 to change between context-less and context-full mode of operation and a protocol evaluation unit 6 to evaluate protocol requests received from UAs via the network interfaces 2, 3. The protocol evaluation unit 6 analyses, e.g., SIP requests to detect the reception of a proxy mode change request that has been sent by a UA. Upon detection of a proxy mode change request, protocol evaluation unit 6 signals the control unit 7 to change the proxy mode. Depending on the received proxy mode change request, control unit 7 enables or disables the first and second signalling component 4, 5, respectively. For example, when the proxy 1 is in context-less operation mode and receives a SIP request commanding a change to a context-full operation (i.e. a stateful SIP proxy or a B2BUA), control unit 7 establishes a session context, enables the second signalling component 5, and disables the first signalling component 4.

The present invention is now illustrated by referring to a first scenario wherein the proxy is initially started as a stateless proxy where the proxy does not record the transaction state and forwards a message to its destination. After forwarding, the proxy has no knowledge of the dialog and its state.

If one participating party wants to hide information or to direct the call to another destination, it tells the stateless proxy to switch to a B2BUA. For this it sets up a new session and sends a SIP message to the proxy.

The message can be a SIP standard request with the method "MESSAGE". The content type is text/*. The content is the destination where to redirect the call and the initial SIP Invite request, which was forwarded by the stateless proxy.

Alternatively, the message could also be a new SIP request with a non-standard message. This message can contain the new destination in the SIP contact header. This message may also contain the previous messages in the dialog (e.g. the initial SIP Invite message) that are mandatory to (re)build the requested state of the B2BUA, e.g. in the message content as a text string.

The proxy receives the message and, depending on the method and the method content, it switches to a B2BUA. For this it needs the session information and the current state of the connection (i.e. the session context), which can be taken from the message content of previous requests such as the initial Invite request. This content is parsed by the User Agent that requests the change of operation mode of the proxy. A SIP message may be created from the previous messages that have been exchanged between the parties to define the session context. In general, all messages that are necessary to construct the requested state of the proxy should be considered when generating the SIP message. In some cases it is however sufficient to consider only the initial call set-up message. Then, this new message corresponds to the Invite request the proxy once has forwarded. The context information is preferably (but not necessarily) sent to the proxy with the request to switch the mode of operation. With receiving the switch request, the former stateless proxy has now the knowledge of the initial request and the session state. In response to receiving the switch request, the proxy may act as having received the original sequence of requests such as the Invite request. In most cases the initial Invite message is sufficient to build the requested proxy state. Acting now as a B2BUA, the proxy now can create a new request with the destination from the contact header of the received message or from the content of the received message. This allows terminating the call on the side where the original call setup request initiated, and starting a new SIP dialog with a new terminal on the destination side. The B2BUA internally connects the two sides. As to SIP, the changes on the destination side are not visible for the original sending UA which still has the impression of talking to the original party.

Fig. 2 shows a signal flow for a typical SIP scenario where network the element is acting as a stateless proxy. The SIP calls are only forwarded by the stateless proxy and the media session is established between the end points.

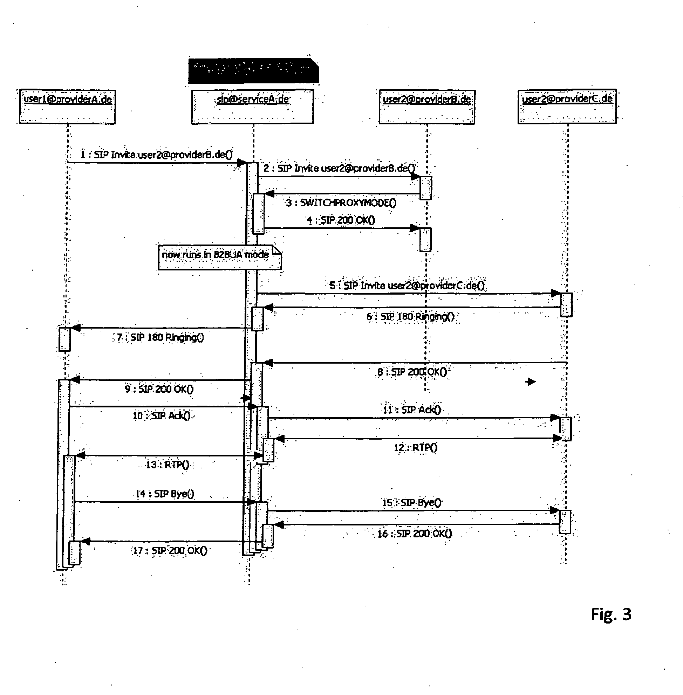

In Fig. 3, the proxy forwards the first Invite request, too. But the second element sends a "SWITCHPROXYMODE" request to redirect the call to network element 3. It should be noted that this request may be sent by any UA at any time after an initial contact between the parties has been established, e.g. after the initial Invite request has been forwarded.

The SWITCHPROXYMODE request could look like:
SWITCHPROXYMODE sip: user2@providerB.de SIP/2.0
CSeq: 10000 SWITCHTOB2BUA
To: <sip: sip@serviceA.de>
Max-Forwards: 69
Content-Type: text/*
Via: SIP/2.0/UDP serviceA. de; branch=z9hG4bK00e0816084eb-1869732224-53-80461155021495638
From: "user2" <sip: user2@providerB.de>; tag=300e0816084eb-1869732224-53-151454815
Call-ID: BE2F3645-2270-486B-B241-1F1DA19383BC@user2@providerB.de Contact: <sip: user2@providerC.de;transport=UDP>
Content-Length: 984
   INVITE sip:user2@providerB.de SIP/2.0
   CSeq: 29360 INVITE
   To: <sip:user2@providerB.de>
   Max-Forwards: 69
   Content-Type: application/sdp
   Via: SIP/2.0/UDP serviceA.de;
   branch=z9hG4bK00e0816084eb-1148978945-51-2063339205-b19591155021495888
   Via: SIP/2.0/UDP providerA.de;
   branch=z9hG4bK00e0816084eb-1869732224-53-80461155021495638
   Record-Route: <sip: serviceA.de;lr;oai=00e0816084eb-1148978945-51-2063339205>
   From: "user1"
   <sip:user1@providerA.de>;tag=300e0816084eb-1869732224-53-151454815
   Call-ID: BE2F3645-2270-486B-B241-1F1DA19383BC@149.204.84.10
   User-Agent: X-PRO build 1081
   Contact: <sip:149.204.84.10:5060;transport=UDP>
   Content-Length: 316

   v=0
   o=user 3928625 3928625 IN IP4 149.204.84.10
   s=X-PRO
   c=IN IP4 149.204.84.10
   t=0 0
   m=audio 8000 RTP/AVP 0 8 3 4 98 97 101
   a=rtpmap:0 pcmu/8000
   a=rtpmap:8 pcma/8000
   a=rtpmap:3 gsm/8000
   a=rtpmap:4 G723/8000
   a=rtpmap:98 iLBC/8000
   a=rtpmap:97 speex/8000
   a=rtpmap:101 telephone-event/8000
   a=fmtp:101 0-15

The contact header in that message delivers the destination where to send the new set up call. The content of the message is the initial request, which provides the session parameters and the session context.

After switching to B2BUA, the proxy can create a new call. If the B2BUA receives a response to the new call, it maps it to the initial request and sends the response code.

As mentioned, an alternative approach is that the method can also be a standard "MESSAGE" and the command that the proxy has to switch to a B2BUA, could be in the message content.

The second scenario where a proxy may change its mode of operation is vice versa. It can be helpful to switch from the B2BUA to a stateless proxy in order to be able to perform more calls in parallel. This can be achieved easier as the other way around, because the B2BUA "just" has to delete the session itself with all stored session information. Afterwards it can act as a stateless proxy.

The present invention is particular useful when used with an Internet Protocol Multimedia System (IMS). SIP servers and proxies in IMS have several roles and are called *Call Session Control Function* and process SIP signalling packets in the IMS. A P-CSCF (*Proxy-CSCF*) is a SIP proxy that is the first point of contact for the IMS terminal. It can be located either in the visited network or in the home network. Some networks might use a Session Border Controller for this function. The terminal will discover its P-CSCF. The P-CSCF is assigned to an IMS terminal during registration, and does not change for the duration of the registration. It sits on the path of all signalling messages, and can inspect every message. It authenticates the user and establishes a security association with the IMS terminal. This prevents spoofing attacks and replay attacks and protects the privacy of the user. Other nodes trust the P-CSCF, and do not have to authenticate the user again. It can also compress and decompress SIP messages which reduce the round-trip over a slow radio link. The P-CSCF may include a *Policy Decision Function,* which authorizes media plane resources e.g. quality of service (QoS) over the media plane. It is used for policy control, bandwidth management, etc. It also generates charging records. An S-CSCF (*Serving-CSCF*) is the central node of the signalling plane. It is a SIP server, but performs session control as well. It is always located in the home network. It handles SIP registrations, which allows it to bind the user location and the SIP address. The S-CSCF sits on the path of all signalling messages, and can inspect every message. It decides to which application server(s) the SIP message will be forwarded, in order to provide their services. It provides routing services, it enforces the policy of the network operator. There can be multiple S-CSCFs in the network for load distribution and high availability reasons. An I-CSCF (*Interrogating-CSCF*) is another SIP function located at the edge of an administrative domain. It is published, so that remote servers can find it, and use it as a forwarding point. The I-CSCF retrieves the user location, and then routes the SIP request to its assigned S-CSCF.

Another useful application of the invention relates to a P-CSCF supporting mobility which is responsible to locate the responsible S-CSCF or I-CSCF upon receiving a register message. In this role, the P-CSCF is usually operated as stateless proxy. If a user now registers a second user device at the P-CSCF, it is advantageous to switch the P-CSCF for this user to a stateful mode of operation. This provides a seamless terminal functionality which allows the user to switch between both terminals in an ongoing call without being recognizable to the other party. In this example, the switching request may be originated by the S-CSCF.

The present invention has many additional useful applications. The above examples are presented only for illustration and shall not limit the scope of the invention as defined by the accompanying claims.

## Claims

1. A proxy (1) for a signalling protocol, comprising a component for a context-full proxy signalling mode (5) and a component for a context-less proxy signalling mode (4), the component for a context-full proxy signalling mode (5) including a state machine in the proxy and maintaining a state or session context for a session, the component for a context-less proxy signalling mode (4) not maintaining a session state or session context, the proxy further comprising a control means (7) to change between context-less and context-full mode of operation, and a protocol evaluation means (6) to evaluate received protocol requests, wherein the protocol evaluation means (6) is configured to detect the reception of a proxy mode change request and to signal the control means (7) to change the proxy mode depending on the received proxy mode change request, the control means (7) enabling or disabling the components (5, 4) for the context-full and context-less proxy signalling mode depending on the received proxy mode change request, wherein the mode change request is received after a session between two network elements is established and the mode change request relates to the change of operation mode of the proxy for the opened session, and wherein a session context is initialized and the state machine in the proxy is set when switching to the context-full mode of operation.

2. The proxy according to claim 1, **characterized in that** the protocol is the session initialization protocol, SIP.

3. The proxy according to claim 2, **characterized in that** the component for a context-full proxy signalling mode implements a back-to-back user agent.

4. The proxy according to claim 1, **characterized by** comprising initialization means for defining a session context when switching from the context-less mode to the context-full mode by applying default values or by using information received with a protocol message.

5. The proxy according to claim 4, wherein the Initialization means define the session context as if the proxy had received the original sequence of requests including the initial SIP Invite request.

6. A system comprising:
a proxy according to claim 1, and a network device;
said network device, **characterized by** comprising signalling means for sending a proxy mode change request to the proxy requesting a transition between the modes of the proxy according to claim 1.

7. A method for changing the modes of operation of a proxy between a context-less signalling mode a context-full signalling mode, the proxy including a state machine and maintaining a state or session context for a session when operating in the context-full signalling mode, the proxy not maintaining a session state or session context when operating in the context-less proxy signalling mode, comprising the steps of:
- receiving a proxy mode change request from a client;
- setting a session context based on said request; and
- altering the mode of operation of the proxy from one signalling mode to another by the proxy depending on the received proxy mode change request,
wherein the proxy mode change request is received after a session between two network elements is established and the proxy mode change request relates to the change of operation mode of the proxy for the opened session, and wherein the state machine in the proxy is set when switching to the context-full signalling mode.

8. Method of claim 7, comprising the following steps before the receiving step:
- receiving a request to set up a connection to a network element; and
- forwarding the request to the network element.

9. A computer software product comprising computer readable code for causing a proxy to perform the method of claim 7 when executed on the proxy.

## Patentansprüche

1. Proxy (1) für ein Signalisierungsprotokoll, umfassend eine Komponente für einen kontextvollen Proxy-Signalisierungsmodus (5) und eine Komponente für einen kontextlosen Proxy-Signalisierungsmodus (4), wobei die Komponente für einen kontextvollen Proxy-Signalisierungsmodus (5) eine Zustandsmaschine im Proxy umfasst und einen Zustand oder einen Sitzungskontext für eine Sitzung aufrechterhält, wobei die Komponente für einen kontextlosen Proxy-Signalisierungsmodus (4) einen Sitzungszustand oder Sitzungskontext nicht aufrechterhält, wobei der Proxy weiterhin ein Steuermittel (7) für das Wechseln zwischen einem kontextlosen und einem kontextvollen Betriebsmodus sowie ein Protokollevaluationsmittel (6) für das Evaluieren von empfangenen Protokollanforderungen umfasst, wobei das Protokollevaluationsmittel (6) dafür konfiguriert ist, den Empfang einer Proxy-Moduswechselanforderung zu erkennen und dem Steuermittel (7) zu signalisieren, dass es den Proxy-Modus in Abhängigkeit von der empfangenen Proxy-Moduswechselanforderung wechseln soll, wobei das Steuermittel (7) die Komponenten (5, 4) für den kontextvollen und den kontextlosen Proxy-Signalisierungsmodus in Abhängigkeit von der empfangenen Proxy-Moduswechselanforderung aktiviert oder deaktiviert, wobei die Moduswechselanforderung nach dem Aufbau einer Sitzung zwischen zwei Netzwerkelementen empfangen wird, und wobei sich die Moduswechselanforderung auf den Wechsel des Betriebsmodus des Proxys für die geöffnete Sitzung bezieht, und wobei ein Sitzungskontext initialisiert und die Zustandsmaschine im Proxy eingestellt wird, wenn in den kontextvollen Betriebsmodus geschaltet wird.

2. Proxy nach Anspruch 1, **dadurch gekennzeichnet, dass** das Protokoll das Sitzungsinitialisierungsprotokoll, SIP, ist.

3. Proxy nach Anspruch 2, **dadurch gekennzeichnet, dass** die Komponente für einen kontextvollen Proxy-Signalisierungsmodus einen Back-to-Back-Benutzeragent implementiert.

4. Proxy nach Anspruch 1, **dadurch gekennzeichnet, dass** er Initialisierungsmittel zum Definieren eines Sitzungskontextes bei einem Wechsel von dem kontextlosen Modus in den kontextvollen Modus durch Anwenden von Standardwerten oder durch Verwenden von in einer Protokollnachricht empfangenen Informationen umfasst.

5. Proxy nach Anspruch 4, wobei die Initialisierungsmittel den Sitzungskontext definieren, als hätte der Proxy die ursprüngliche Sequenz von Anforderungen einschließlich der ursprünglichen SIP-Invite-Anforderung empfangen.

6. System, umfassend:
Einen Proxy gemäß Anspruch 1, und eine Netzwerkvorrichtung;
wobei die besagte Netzwerkvorrichtung **dadurch gekennzeichnet ist, dass** sie Signalisierungsmittel zum Senden einer Proxy-Moduswechselanforderung an den Proxy, um einen Übergang zwischen den Betriebsmodi des Proxys gemäß Anspruch 1 anzufordern, umfasst.

7. Verfahren zum Wechseln der Betriebsmodi eines Proxys zwischen einem kontextlosen Signalisierungsmodus und einem kontextvollen Signalisierungsmodus, wobei der Proxy eine Zustandsmaschine umfasst und bei Betrieb im kontextvollen Signalisierungsmodus einen Zustand oder einen Sitzungskontext für eine Sitzung aufrechterhält, wobei der Proxy einen Sitzungszustand oder einen Sitzungskontext nicht aufrechterhält, wenn er sich im kontextlosen Proxy-Signalisierungsmodus befindet, wobei das Verfahren die folgenden Schritte umfasst:
- Empfangen einer Proxy-Moduswechselanforderung von einem Client;
- Festlegen eines Sitzungskontextes auf der Basis der besagten Anforderung; und
- Ändern des Betriebsmodus des Proxys von einem Signalisierungsmodus in einen anderen durch den Proxy in Abhängigkeit von der empfangenen Proxy-Moduswechselanforderung,
wobei die Moduswechselanforderung nach dem Aufbau einer Sitzung zwischen zwei Netzwerkelementen empfangen wird, und wobei sich die Moduswechselanforderung auf den Wechsel des Betriebsmodus des Proxys für die geöffnete Sitzung bezieht, und wobei ein Sitzungskontext initialisiert und die Zustandsmaschine im Proxy eingestellt wird, wenn in den kontextvollen Betriebsmodus geschaltet wird.

8. Verfahren nach Anspruch 7, vor dem Schritt des Empfangens die folgenden Schritte umfassend:
- Empfangen einer Anforderung für den Aufbau einer Verbindung zu einem Netzwerkelement; und
- Weiterleiten der Anforderung an das Netzwerkelement.

9. Computer-Softwareprodukt, umfassend einen computerlesbaren Code, um bei dessen Ausführung einen Proxy anzuweisen, das Verfahren gemäß Anspruch 7 durchzuführen.

## Revendications

1. Proxy (1) pour un protocole de signalisation, comprenant un composant pour un mode de signalisation avec contexte (5) et un composant pour un mode de signalisation sans contexte (4), le composant pour un mode de signalisation avec contexte (5) comprenant une machine d'état dans le proxy et conservant un état ou un contexte de session pour une session, le composant pour un mode de signalisation sans contexte (4) ne conservant pas un état de session ou un contexte de session, le proxy comprenant en outre un moyen de commande (7) pour changer entre les modes de fonctionnement sans contexte et avec contexte et un moyen d'évaluation de protocole (6) pour évaluer les requêtes de protocole reçues, dans lequel le moyen d'évaluation de protocole (6) est configuré pour détecter la déception d'une requête de changement de mode de proxy et pour signaler au moyen de commande (7) de changer le mode de proxy en fonction de la requête de changement de mode de proxy reçue, le moyen de commande (7) activant ou désactivant les composants (5, 4) pour le mode de signalisation de proxy avec contexte ou sans contexte en fonction de la requête de changement de mode de proxy reçue, dans lequel la requête de changement de mode est reçue après qu'une session entre deux éléments de réseau est établie et la requête de changement de mode concerne le changement de mode de fonctionnement du proxy pour la session ouverte, et dans lequel un contexte de session est initialisé et la machine d'état dans le proxy est définie lors du passage dans le mode de fonctionnement avec contexte.

2. Proxy selon la revendication 1, **caractérisé en ce que** le protocole est le protocole d'initialisation de session SIP.

3. Proxy selon la revendication 2, **caractérisé en ce que** le composant pour un mode de signalisation avec contexte met en oeuvre un agent utilisateur dos à dos.

4. Proxy selon la revendication 1, **caractérisé en ce qu'**il comprend un moyen d'initialisation pour définir un contexte de session lors du passage du mode sans contexte au mode avec contexte en appliquant des valeurs par défaut ou en utilisant des informations reçues avec un message de protocole.

5. Proxy selon la revendication 4, dans lequel le moyen d'initialisation définit le contexte de session comme si le proxy avait reçu la séquence originale de requêtes comprenant la requête d'invitation SIP initiale.

6. Système comprenant :
un proxy selon la revendication 1 et un dispositif de réseau ;
ledit dispositif de réseau étant **caractérisé en ce qu'**il comprend un moyen de signalisation pour envoyer une requête de changement de mode de proxy au proxy demandant une transition entre les modes du proxy selon la revendication 1.

7. Procédé de changement des modes de fonctionnement d'un proxy entre un mode de signalisation sans contexte et un mode de signalisation avec contexte, le proxy comprenant une machine d'état et conservant un état ou un contexte de session pour une session dans le mode de signalisation avec contexte, le proxy ne conservant pas un état de session ou un contexte de session dans le mode de signalisation sans contexte, comprenant les étapes suivantes :
- réception d'une requête de changement de mode de proxy depuis un client ;
- établissement d'un contexte de session sur la base de ladite requête ; et
- modification du mode de fonctionnement du proxy d'un mode de signalisation à un autre par le proxy en fonction de la requête de changement de mode de proxy reçue ;
dans lequel la requête de changement de mode de proxy est reçue après qu'une session entre deux éléments de réseau est établie et la requête de changement de mode de proxy concerne le changement de mode de fonctionnement du proxy pour la session ouverte et dans lequel la machine d'état dans le proxy est définie lors du passage dans le mode de signalisation avec contexte.

8. Procédé selon la revendication 7, comprenant les étapes suivantes avant l'étape de réception :
- réception d'une requête pour établir une connexion à un élément de réseau ; et
- transfert de la requête à l'élément de réseau.

9. Produit logiciel informatique comprenant un code lisible par ordinateur pour amener un proxy à exécuter le procédé selon la revendication 7 lorsqu'il est exécuté sur le proxy.
